# EUROPEAN PATENT APPLICATION

(11) **EP 4 210 243 A1**
(43) Date of publication of application: **12.07.2023**
(21) Application number: 21874371.4
(22) Date of filing: 26.09.2021
(51) Int. Cl.: H04B 10/291

(54) **OPTICAL AMPLIFICATION DEVICE AND MULTI-PORT WAVELENGTH DIVISION MULTIPLEXING COUPLER**

(30) Priority: 30.09.2020 CN 202011063407
(71) Applicant: Huawei Technologies Co., Ltd., Shenzhen, Guangdong 518129 (CN)
(72) Inventor: JIANG, Hengyun, Shenzhen, Guangdong 518129 (CN); WU, Bo, Shenzhen, Guangdong 518129 (CN)
(74) Representative: Körber, Martin Hans
(86) International application number: PCT/CN2021/120594
(87) International publication number: WO 2022/068711

(57) **Abstract**

Embodiments of this application disclose an optical amplification apparatus and a multi-port wavelength division multiplexing coupler, configured to amplify an optical signal. The optical amplification apparatus in embodiments of this application includes: a first pump source, where the first pump source is configured to provide first pump light, the first pump light is configured to amplify a plurality of first optical signals; a first multi-port wavelength division multiplexing coupler, where the first multi-port wavelength division multiplexing coupler is configured to couple the plurality of first optical signals and the first pump light; and an active optical fiber connection cable, where the active optical fiber connection cable includes an active doped fiber for transmitting and amplifying a plurality of third optical signals, and the plurality of third optical signals are optical signals obtained by coupling the plurality of first optical signals to the first pump light. In embodiments of this application, the optical amplification apparatus couples first optical signals with different wavelengths through a multi-port wavelength division multiplexing coupler, to amplify the first optical signals with different wavelengths, thereby reducing a size of an optical amplifier.

## Description

### TECHNICAL FIELD

This application claims priority to Chinese Patent Application No. 202011063407.0, filed with the China National Intellectual Property Administration on September 30, 2020 and entitled "OPTICAL AMPLIFICATION APPARATUS AND MULTI-PORT WAVELENGTH DIVISION MULTIPLEXING COUPLER", which is incorporated herein by reference in its entirety.

### BACKGROUND

An optical amplifier is configured to compensate for a power loss of optical signals caused during optical fiber transmission. A doped fiber amplifier is a most commonly used all-optical amplifier. A principle of the doped fiber amplifier is to perform wide-spectrum optical amplification based on active optical fibers.

In an optical transmission network, a single doped fiber amplifier may simultaneously amplify optical signals with different wavelengths. However, a single doped fiber amplifier cannot be used to simultaneously amplify a plurality of optical signals with a same wavelength. Therefore, to implement a function of simultaneously amplifying a plurality of optical fiber signals, a plurality of doped fiber amplifiers are generally superimposed to form an optical amplifier array.

However, in an actual application process, a manner of superimposing a plurality of doped fiber amplifiers increases a size of the optical amplifier array, and makes it difficult to deploy the optical amplifier array on a site with a small operation space.

### SUMMARY

Embodiments of this application provide an optical amplification apparatus and a multi-port wavelength division multiplexing coupler, configured to amplify optical signals with different wavelengths. The optical amplification apparatus may perform optical amplification on the first optical signals with different wavelengths, thereby reducing a size of the optical amplification apparatus, and reducing a space required for deploying an array of the optical amplification apparatus. This simplifies deployment of the optical amplification apparatus.

A first aspect of embodiments of this application provides an optical amplification apparatus, including:
a plurality of input ends, configured to receive a plurality of first optical signals with different wavelengths; a plurality of output ends, configured to output a plurality of second optical signals, where the plurality of second optical signals are optical signals obtained by amplifying the plurality of first optical signals; a first pump source, where the first pump source is configured to provide first pump light for amplifying the plurality of first optical signals; a first multi-port wavelength division multiplexing coupler, where the first multi-port wavelength division multiplexing coupler includes a plurality of first connection ports connected to the plurality of input ends, and the first multi-port wavelength division multiplexing coupler is configured to couple the plurality of first optical signals and the first pump light; and an active optical fiber connection cable, where the active optical fiber connection cable includes an active doped fiber for transmitting and amplifying a plurality of third optical signals, and the plurality of third optical signals are optical signals obtained by coupling the plurality of first optical signals to the first pump light; and the plurality of input ends are connected to the first multi-port wavelength division multiplexing coupler, the first pump source is connected to the first multi-port wavelength division multiplexing coupler through a first optical fiber connection cable, the first multi-port wavelength division multiplexing coupler is connected to the active optical fiber connection cable, the active optical fiber connection cable is connected to the plurality of output ends, and the first optical fiber connection cable is configured to transmit the first pump light.

In embodiments of this application, the optical amplification apparatus may perform optical amplification on the first optical signals with different wavelengths, thereby reducing a size of the optical amplification apparatus, and reducing a space required for deploying an array of the optical amplification apparatus. This simplifies deployment of the optical amplification apparatus.

Based on an implementation of the first aspect, in a possible implementation, the first multi-port wavelength division multiplexing coupler includes a fused-tapered region, the fused-tapered region includes a plurality of second optical fiber connection cables respectively connected to the plurality of first connection ports, so that the plurality of first optical signals are transmitted through the second optical fiber connection cables, and the first optical fiber connection cable is coupled to the plurality of second optical fiber connection cables in the fused-tapered region.

In embodiments of this application, the plurality of second optical fiber connection cables are coupled to the first optical fiber connection cable configured to transmit the first pump light through the fused-tapered region, thereby reducing a size of the multi-port wavelength division multiplexing coupler.

Based on the implementation of the first aspect, in a possible implementation, the fused-tapered region further includes a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

In embodiments of this application, a third optical fiber connection cable is arranged between the first optical fiber connection cable and the second optical fiber connection cables to perform optical power adjustment, thereby improving operating flexibility of the multi-port wavelength division multiplexing coupler.

Based on the implementation of the first aspect, in a possible implementation, the first optical fiber connection cable is separately bound with the plurality of second optical fiber connection cables.

In embodiments of this application, the first optical fiber connection cable is bound with the second optical fiber connection cables, so that a contact area between the first optical fiber connection cable and the second optical fiber connection cables is increased, and pumping efficiency is improved.

Based on the implementation of the first aspect, in a possible implementation, the optical amplification apparatus further includes:
a gain flattening filter, where the gain flattening filter is configured to perform gain flattening on fourth optical signals, the fourth optical signals are optical signals obtained by transmitting and amplifying the third optical signals by the active doped fiber, and the gain flattening filter is arranged on the active optical fiber connection cable.

In embodiments of this application, the optical amplification apparatus further includes a gain flattening filter, so that gain flattening may be performed on the fourth optical signals, thereby improving optical amplification efficiency of the optical amplification apparatus.

Based on the implementation of the first aspect, in a possible implementation, the gain flattening filter is a grating.

In embodiments of this application, when the gain flattening filter is the grating, implementability of the solution is improved.

Based on the implementation of the first aspect, in a possible implementation, a wavelength of the grating is set to a wavelength section of the fourth optical signal, so that the grating performs a function of gain flattening filtering on the fourth optical signals.

In embodiments of this application, the wavelength of the grating is set to the wavelength section of the fourth optical signal, so that the function of gain flattening filtering may be implemented on the fourth optical signals.

Based on the implementation of the first aspect, in a possible implementation, a wavelength of the grating is set to a wavelength section of the first pump light, so that the grating performs power distribution regulation on the first pump light.

In embodiments of this application, a wavelength of the grating is set to a wavelength of the first pump light, so that the function of performing power distribution regulation on the first pump light may be implemented.

Based on the implementation of the first aspect, in a possible implementation, the plurality of output ends are further configured to receive a plurality of first target optical signals with different wavelengths;
the plurality of input ends are further configured to output a plurality of second target optical signals, and the plurality of second target optical signals are optical signals obtained by amplifying the first target optical signals;
the optical amplification apparatus further includes:
   a second pump source, where the second pump source is configured to provide second pump light, and the second pump light is configured to amplify the plurality of first target optical signals; and
   a second multi-port wavelength division multiplexing coupler, where the second multi-port wavelength division multiplexing coupler includes a plurality of second connection ports, the plurality of second connection ports are connected to the plurality of output ends, and the second multi-port wavelength division multiplexing coupler is configured to couple the plurality of first target optical signals and the second pump light;
   the active doped fiber is further configured to transmit and amplify a plurality of third target optical signals, and the plurality of third target optical signals are optical signals obtained by coupling the plurality of first target optical signals to the second pump light; and
   the plurality of output ends are connected to the second multi-port wavelength division multiplexing coupler, the second pump source is connected to the second multi-port wavelength division multiplexing coupler, the second multi-port wavelength division multiplexing coupler is connected to the active optical fiber connection cable, and the active optical fiber connection cable is connected to the first multi-port wavelength division multiplexing coupler.

In embodiments of this application, the pump source and the multi-port wavelength division multiplexing coupler are arranged at both the input ends and the output ends, so that a bidirectional pumping function of the optical amplification apparatus is implemented, and multi-facetedness of the optical amplification apparatus in actual application is improved.

Based on the implementation of the first aspect, in a possible implementation, the active optical fiber connection cable is an active optical fiber connection cable of a plurality of arrays.

In embodiments of this application, the active optical fiber connection cable is the active optical fiber connection cable of the plurality of arrays, thereby improving implementability of the solution.

Based on the implementation of the first aspect, in a possible implementation, the active optical fiber connection cable of the plurality of arrays is formed in a form of discrete optical fibers.

In embodiments of this application, the active optical fiber connection cable of the plurality of arrays is formed in the form of discrete optical fibers, thereby improving implementability of the solution.

Based on the implementation of the first aspect, in a possible implementation, the active optical fiber connection cable of the plurality of arrays is formed in a form of ribbon optical fibers or bundle optical fibers.

In embodiments of this application, the active optical fiber connection cable of the plurality of arrays is formed in the form of ribbon optical fibers or bundle optical fibers, thereby reducing a size of the active optical fiber connection cable of the plurality of arrays.

Based on the implementation of the first aspect, in a possible implementation, one end of the active optical fiber connection cable of the plurality of arrays is formed in a form of discrete optical fibers, and the other end is formed in a form of ribbon optical fibers or bundle optical fibers.

In embodiments of this application, one end of the active optical fiber connection cable of the plurality of arrays is formed in the form of discrete optical fibers, and the other end is formed in the form of ribbon optical fibers or bundle optical fibers, thereby improving flexibility of arranging the active optical fiber connection cable of the plurality of arrays.

Based on the implementation of the first aspect, in a possible implementation, the optical amplification apparatus further includes:
an optical isolator, where the optical isolator is arranged at the plurality of input ends or the plurality of output ends, and is configured to isolate reflected light of the plurality of first optical signals or reflected light of the plurality of second optical signals.

In embodiments of this application, when the optical amplification apparatus further includes the optical isolator, the reflected light of the optical signals may be reduced, thereby improving optical amplification efficiency.

Based on the implementation of the first aspect, in a possible implementation, the optical isolator is an integrated optical isolator or a spatial optical isolator.

In embodiments of this application, the optical isolator is the integrated optical isolator or the spatial optical isolator, thereby improving implementability of the solution.

Based on the implementation of the first aspect, in a possible implementation, the active doped fiber is an erbium doped fiber or a bi-doped fiber.

In embodiments of this application, when the active doped fiber is the erbium doped fiber or the bi-doped fiber, optical amplification efficiency is improved.

Based on the implementation of the first aspect, in a possible implementation, the first multi-port wavelength division multiplexing coupler is manufactured in a fused biconical coupling manner.

In embodiments of this application, a manufacturing manner of the first multi-port wavelength division multiplexing coupler is described, thereby improving implementability of the solution.

Based on the implementation of the first aspect, in a possible implementation, the first multi-port wavelength division multiplexing coupler is manufactured in a multi-layer film coupling manner.

In embodiments of this application, a manufacturing manner of the first multi-port wavelength division multiplexing coupler is described, thereby improving implementability of the solution.

Based on the implementation of the first aspect, in a possible implementation, the first multi-port wavelength division multiplexing coupler is manufactured in a grating coupling manner.

In embodiments of this application, a manufacturing manner of the first multi-port wavelength division multiplexing coupler is described, thereby improving implementability of the solution.

A second aspect of this application provides a multi-port wavelength division multiplexing coupler.

A multi-port wavelength division multiplexing coupler includes:
a plurality of first connection ports, configured to receive a plurality of first optical signals with different wavelengths; and
the plurality of first connection ports are further configured to receive first pump light for amplifying the plurality of first optical signals; and
a fused-tapered region, configured to couple the plurality of first optical signals and the first pump light.

In embodiments of this application, the multi-port wavelength division multiplexing coupler may perform optical amplification on first optical signals with different wavelengths, thereby reducing a size of the multi-port wavelength division multiplexing coupler, and reducing a space required for deploying an array of the optical amplification apparatus. This simplifies deployment of the optical amplification apparatus.

Based on the multi-port wavelength division multiplexing coupler of the second aspect, in a possible implementation, the fused-tapered region includes a first optical fiber connection cable, configured to transmit the first pump light;
the fused-tapered region further includes a plurality of second optical fiber connection cables configured to transmit the first optical signals; and
the first optical fiber connection cable is coupled to the plurality of second optical fiber connection cables in the fused-tapered region.

In embodiments of this application, the plurality of second optical fiber connection cables are coupled to the first optical fiber connection cable configured to transmit the first pump light through the fused-tapered region, thereby reducing a size of the multi-port wavelength division multiplexing coupler.

Based on the multi-port wavelength division multiplexing coupler of the second aspect, in a possible implementation, the fused-tapered region further includes a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

In embodiments of this application, a third optical fiber connection cable is arranged between the first optical fiber connection cable and the second optical fiber connection cables to perform optical power adjustment, thereby improving operating flexibility of the multi-port wavelength division multiplexing coupler.

Based on the multi-port wavelength division multiplexing coupler of the second aspect, in a possible implementation, the first optical fiber connection cable is separately bound with the plurality of second optical fiber connection cables.

In embodiments of this application, the first optical fiber connection cable is bound with the second optical fiber connection cables, so that a contact area between the first optical fiber connection cable and the second optical fiber connection cables is increased, and pumping efficiency is improved.

A third aspect of embodiments of this application provides an optical amplifier board.

The optical amplifier board includes:
a first pump source, where the first pump source is configured to provide first pump light; and
a first multi-port wavelength division multiplexing coupler, configured to receive a plurality of first optical signals with different wavelengths;
the first multi-port wavelength division multiplexing coupler is further configured to couple the plurality of first optical signals and the first pump light; and
the first pump source is connected to the first multi-port wavelength division multiplexing coupler.

In embodiments of this application, a wavelength division multiplexing coupler performs optical amplification on a plurality of first optical signals with different wavelengths, so that a size of an optical amplifier board integrating an optical amplification apparatus is reduced, and a space required for deploying the optical amplifier board integrating the optical amplification apparatus is reduced. This simplifies deployment of the optical amplifier board integrating the optical amplification apparatus.

Based on the optical amplifier board of the third aspect, in a possible implementation, the first multi-port wavelength division multiplexing coupler includes a fused-tapered region, the fused-tapered region includes a first optical fiber connection cable, and the first optical fiber connection cable is configured to transmit first pump light;
the fused-tapered region further includes a plurality of second optical fiber connection cables are configured to transmit the first optical signals; and
the first optical fiber connection cable is coupled to the plurality of second optical fiber connection cables in the fused-tapered region.

In embodiments of this application, the plurality of second optical fiber connection cables are coupled to the first optical fiber connection cable configured to transmit the first pump light through the fused-tapered region, thereby reducing a size of the multi-port wavelength division multiplexing coupler.

Based on the optical amplifier board of the third aspect, in a possible implementation, the fused-tapered region further includes a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

In embodiments of this application, a third optical fiber connection cable is arranged between the first optical fiber connection cable and the second optical fiber connection cables to perform optical power adjustment, thereby improving operating flexibility of the multi-port wavelength division multiplexing coupler.

Based on the optical amplifier board of the third aspect, in a possible implementation, the first optical fiber connection cable is separately bound with the plurality of second optical fiber connection cables.

In embodiments of this application, the first optical fiber connection cable is bound with the second optical fiber connection cables, so that a contact area between the first optical fiber connection cable and the second optical fiber connection cables is increased, and pumping efficiency is improved.

Based on the optical amplifier board of the third aspect, in a possible implementation, the optical amplifier board further includes:
an active optical fiber connection cable, where the active optical fiber connection cable includes an active doped fiber for transmitting and amplifying a plurality of third optical signals, the plurality of third optical signals are optical signals obtained by coupling the plurality of first optical signals to the first pump light, the plurality of first optical signals are received by the first multi-port wavelength division multiplexing coupler, and wavelengths of the plurality of first optical signals are different.

In embodiments of this application, the plurality of third optical signals are transmitted and amplified through the active optical fiber connection cable, thereby improving implementability of the solution.

Based on the optical amplifier board of the third aspect, in a possible implementation, the optical amplifier board further includes:
a gain flattening filter, where the gain flattening filter is configured to perform gain flattening on fourth optical signals, the fourth optical signals are optical signals obtained by transmitting and amplifying the third optical signals by the active doped fiber, and the gain flattening filter is arranged on the active optical fiber connection cable.

In embodiments of this application, the optical amplifier board further includes a gain flattening filter, so that gain flattening may be performed on the fourth optical signal, thereby improving optical amplification efficiency of the optical amplifier board.

Based on the optical amplifier board of the third aspect, in a possible implementation, the gain flattening filter is a grating.

In embodiments of this application, when the gain flattening filter is the grating, implementability of the solution is improved.

Based on the optical amplifier board of the third aspect, in a possible implementation, a wavelength of the grating is set to a wavelength section of the fourth optical signal, so that the grating performs a function of gain flattening filtering on the fourth optical signals.

In embodiments of this application, the wavelength of the grating is set to the wavelength section of the fourth optical signal, so that the function of gain flattening filtering may be implemented on the fourth optical signals.

Based on the optical amplifier board of the third aspect, in a possible implementation, a wavelength of the grating is set to a wavelength section of the first pump light, so that the grating performs power distribution regulation on the first pump light.

In embodiments of this application, a wavelength of the grating is set to a wavelength of the first pump light, so that the function of performing power distribution regulation on the first pump light may be implemented.

Based on the optical amplifier board of the third aspect, in a possible implementation, the active optical fiber connection cable is an active optical fiber connection cable of a plurality of arrays.

In embodiments of this application, the active optical fiber connection cable is the active optical fiber connection cable of the plurality of arrays, thereby improving implementability of the solution.

Based on the optical amplifier board of the third aspect, in a possible implementation, the active optical fiber connection cable of the plurality of arrays is formed in a form of discrete fibers.

In embodiments of this application, the active optical fiber connection cable of the plurality of arrays is formed in the form of discrete optical fibers, thereby improving implementability of the solution.

Based on the optical amplifier board of the third aspect, in a possible implementation, the active optical fiber connection cable of the plurality of arrays is formed in a form of ribbon optical fibers or bundle optical fibers.

In embodiments of this application, the active optical fiber connection cable of the plurality of arrays is formed in the form of ribbon optical fibers or bundle optical fibers, thereby reducing a size of the active optical fiber connection cable of the plurality of arrays.

Based on the optical amplifier board of the third aspect, in a possible implementation, one end of the active optical fiber connection cable of the plurality of arrays is formed in a form of discrete optical fibers, and the other end is formed in a form of ribbon optical fibers or bundle optical fibers.

In embodiments of this application, one end of the active optical fiber connection cable of the plurality of arrays is formed in the form of discrete optical fibers, and the other end is formed in the form of ribbon optical fibers or bundle optical fibers, thereby improving flexibility of arranging the active optical fiber connection cable of the plurality of arrays.

Based on the optical amplifier board of the third aspect, the active doped fiber is an erbium doped fiber or a bi-doped fiber.

In embodiments of this application, when the active doped fiber is the erbium doped fiber or the bi-doped fiber, optical amplification efficiency is improved.

A fourth aspect of this application provides an optical backplane.

The optical backplane includes:
a first multi-port wavelength division multiplexing coupler, configured to receive a plurality of first optical signals with different wavelengths;
a first optical fiber connection cable, configured to receive first pump light sent by a first pump source; and
an active optical fiber connection cable, where the active optical fiber connection cable includes an active doped fiber for transmitting and amplifying a plurality of third optical signals, and the plurality of third optical signals are optical signals obtained by coupling the plurality of first optical signals to the first pump light; and
the first optical fiber connection cable is connected to the first multi-port wavelength division multiplexing coupler, and the active optical fiber connection cable is connected to the first multi-port wavelength division multiplexing coupler.

In embodiments of this application, a wavelength division multiplexing coupler performs optical amplification on a plurality of first optical signals with different wavelengths, so that a size of the optical backplane is reduced, and a space required for deploying the optical backplane is reduced. This simplifies deployment of the optical backplane.

The first multi-port wavelength division multiplexing coupler includes a fused-tapered region, the fused-tapered region includes a plurality of second optical fiber connection cables respectively connected to the plurality of first connection ports, so that the plurality of first optical signals are transmitted through the second optical fiber connection cables, and the first optical fiber connection cable is coupled to the plurality of second optical fiber connection cables in the fused-tapered region.

In embodiments of this application, the plurality of second optical fiber connection cables are coupled to the first optical fiber connection cable configured to transmit the first pump light through the fused-tapered region, thereby reducing a size of the multi-port wavelength division multiplexing coupler.

Based on the optical backplane of the fourth aspect, in a possible implementation, the fused-tapered region further includes a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

In embodiments of this application, a third optical fiber connection cable is arranged between the first optical fiber connection cable and the second optical fiber connection cables to perform optical power adjustment, thereby improving operating flexibility of the multi-port wavelength division multiplexing coupler.

Based on the optical backplane of the fourth aspect, in a possible implementation, the first optical fiber connection cable is separately bound with the plurality of second optical fiber connection cables.

In embodiments of this application, the first optical fiber connection cable is bound with the second optical fiber connection cables, so that a contact area between the first optical fiber connection cable and the second optical fiber connection cables is increased, and pumping efficiency is improved.

Based on the optical backplane of the fourth aspect, in a possible implementation, the active optical fiber connection cable is an active optical fiber connection cable of a plurality of arrays.

In embodiments of this application, the active optical fiber connection cable is the active optical fiber connection cable of the plurality of arrays, thereby improving implementability of the solution.

Based on the optical backplane of the fourth aspect, in a possible implementation, the active optical fiber connection cable of the plurality of arrays is formed in a form of discrete optical fibers.

In embodiments of this application, the active optical fiber connection cable of the plurality of arrays is formed in the form of discrete optical fibers, thereby improving implementability of the solution.

Based on the optical backplane of the fourth aspect, in a possible implementation, the active optical fiber connection cable of the plurality of arrays is formed in a form of ribbon optical fibers or bundle optical fibers.

In embodiments of this application, the active optical fiber connection cable of the plurality of arrays is formed in the form of ribbon optical fibers or bundle optical fibers, thereby reducing a size of the active optical fiber connection cable of the plurality of arrays.

Based on the optical backplane of the fourth aspect, in a possible implementation, one end of the active optical fiber connection cable of the plurality of arrays is formed in a form of discrete optical fibers, and the other end is formed in a form of ribbon optical fibers or bundle optical fibers.

In embodiments of this application, one end of the active optical fiber connection cable of the plurality of arrays is formed in the form of discrete optical fibers, and the other end is formed in the form of ribbon optical fibers or bundle optical fibers, thereby improving flexibility of arranging the active optical fiber connection cable of the plurality of arrays.

Based on the optical backplane of the fourth aspect, in a possible implementation, the active doped fiber is an erbium doped fiber or a bi-doped fiber.

In embodiments of this application, when the active doped fiber is the erbium doped fiber or the bi-doped fiber, optical amplification efficiency is improved.

A fifth aspect of this application provides an optical amplification system.

The optical amplification system includes:
an optical amplifier board, where the optical amplifier board includes a first pump source configured to provide first pump light;
the optical amplifier board further includes a first multi-port wavelength division multiplexing coupler, configured to receive a plurality of first optical signals with different wavelengths;
the first multi-port wavelength division multiplexing coupler is further configured to couple the plurality of first optical signals and the first pump light; and
the first pump source is connected to the first multi-port wavelength division multiplexing coupler; and
an optical backplane, where the optical backplane includes an active optical fiber connection cable, the active optical fiber connection cable includes an active doped fiber for transmitting and amplifying a plurality of third optical signals, and the plurality of third optical signals are optical signals obtained by coupling the plurality of first optical signals to the first pump light; and
the optical amplifier board is connected to the optical backplane.

In embodiments of this application, the optical amplification system may perform optical amplification on first optical signals with different wavelengths, thereby reducing a size of the optical amplification system, and reducing a space required for deploying the optical amplification system. This simplifies deployment of the optical amplification system.

According to the foregoing technical solutions, it can be learned that embodiments of this application have the following advantages.

In embodiments of this application, a wavelength division multiplexing coupler is connected to the plurality of input ends, and performs optical amplification on the plurality of first optical signals with different wavelengths, thereby reducing the space required for deploying the array of the optical amplification apparatus, and simplifying deployment of the optical amplification apparatus.

### BRIEF DESCRIPTION OF DRAWINGS

FIG. 1 is a schematic structural diagram of an optical amplification apparatus according to an embodiment of this application;
FIG. 2 is another schematic structural diagram of an optical amplification apparatus according to an embodiment of this application;
FIG. 3 is a schematic structural diagram of a multi-port wavelength division multiplexing coupler according to an embodiment of this application;
FIG. 4 is another schematic structural diagram of a multi-port wavelength division multiplexing coupler according to an embodiment of this application;
FIG. 5 is another schematic structural diagram of a multi-port wavelength division multiplexing coupler according to an embodiment of this application;
FIG. 6 is another schematic structural diagram of a multi-port wavelength division multiplexing coupler according to an embodiment of this application;
FIG. 7 is a schematic structural diagram of an active optical fiber connection cable according to an embodiment of this application;
FIG. 8 is another schematic structural diagram of an active optical fiber connection cable according to an embodiment of this application;
FIG. 9 is another schematic structural diagram of an active optical fiber connection cable according to an embodiment of this application;
FIG. 10 is another schematic structural diagram of an optical amplification apparatus according to an embodiment of this application;
FIG. 11 is a schematic structural diagram of an optical amplification system according to an embodiment of this application;
FIG. 12 is a schematic structural diagram of an optical backplane according to an embodiment of this application;
FIG. 13 is a schematic structural diagram of an optical amplifier board according to an embodiment of this application; and
FIG. 14 is another schematic structural diagram of an optical amplifier board according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, with technology development and emergence of new scenarios, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It can be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

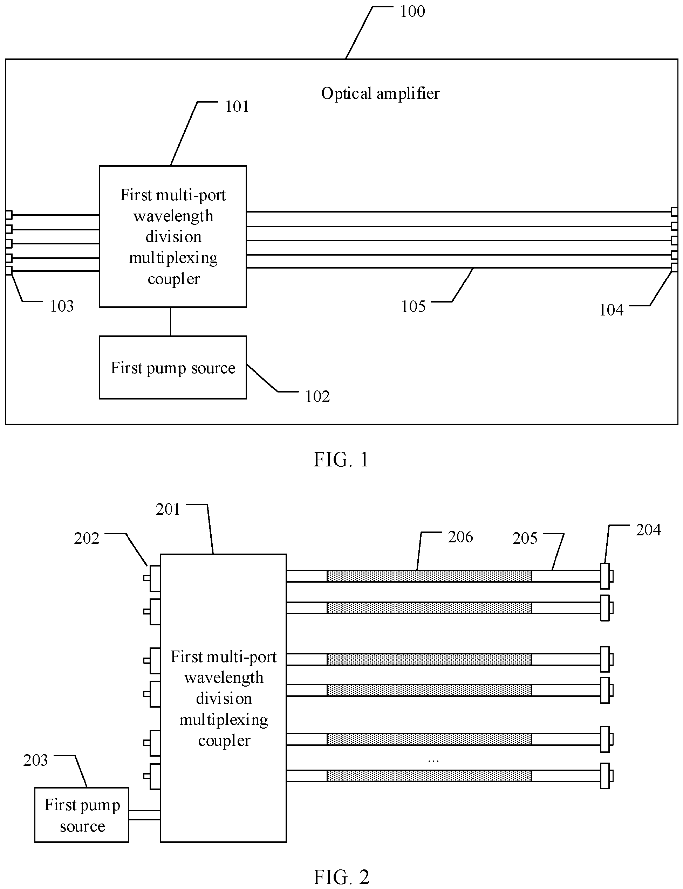

FIG. 1 is a schematic structural diagram of an optical amplification apparatus according to an embodiment of this application.

Embodiments of this application provide an optical amplification apparatus 100. The optical amplification apparatus 100 includes a first multi-port wavelength division multiplexing coupler 101, a first pump source 102, a plurality of input ends 103, a plurality of output ends 104, and a plurality of active optical fiber connection cables 105. The plurality of input ends 103 are connected to the first multi-port wavelength division multiplexing coupler 101, the first pump source 102 is connected to the first multi-port wavelength division multiplexing coupler 101 through a first optical fiber connection cable, the first multi-port wavelength division multiplexing coupler 102 is connected to the plurality of active optical fiber connection cables 105, and the plurality of active optical fiber connection cables 105 are connected to the plurality of output ends 103. It may be understood that in this embodiment of this application, a quantity or a combination of components in the optical amplification apparatus is not limited. For example, five input ends 103 may be connected to the first multi-port wavelength division multiplexing coupler 102, or six input ends 103 may be connected to the first multi-port wavelength division multiplexing coupler 102.

The optical amplification apparatus 100 receives a plurality of first optical signals with different wavelengths through the plurality of input ends 103. It may be understood that in an actual application process, the wavelengths of the plurality of first optical signals may be partially the same, or may be partially different, or may be completely different. This is not specifically limited herein.

The first pump source 102 is configured to provide first pump light for amplifying the plurality of first optical signals.

After receiving the plurality of first optical signals, the plurality of input ends 103 transmit the plurality of first optical signals to the first multi-port wavelength division multiplexing coupler 102 through a plurality of first connection ports of the first multi-port wavelength division multiplexing coupler 102, so that the first multi-port wavelength division multiplexing coupler 102 couples the plurality of first optical signals and the first pump light.

The active optical fiber connection cable 105 further includes an active doped fiber for transmitting and amplifying a plurality of third optical signals, where the plurality of third optical signals are optical signals obtained by coupling the plurality of first optical signals to the first pump light.

Specifically, after the first multi-port wavelength division multiplexing coupler 102 couples the plurality of first optical signals and the first pump light, the plurality of third optical signals are obtained, and the plurality of third optical signals are transmitted to the plurality of output ends 104 through the active optical fiber connection cable 105. The plurality of third optical signals are amplified in a transmission process when passing through the active optical fiber connection cable 105 including the active doped fiber.

After the plurality of third optical signals are transmitted and amplified through the active optical fiber connection cable 105, the plurality of second optical signals are obtained, and the plurality of second optical signals are output through the plurality of output ends 104.

Based on the optical amplification apparatus described in FIG. 1, the following describes in detail an optical amplification apparatus provided in embodiments of this application.

FIG. 2 is another schematic structural diagram of an optical amplification apparatus according to an embodiment of this application.

This embodiment provides an optical amplification apparatus, including a first multi-port wavelength division multiplexing coupler 201, a plurality of input ends 202, a first pump source 203, a plurality of output ends 204, and an active optical fiber connection cable 205.

The plurality of input ends 202 are connected to the first multi-port wavelength division multiplexing coupler 201, the first pump source 203 is connected to the first multi-port wavelength division multiplexing coupler 201 through a first optical fiber connection cable, the first multi-port wavelength division multiplexing coupler 201 is connected to a plurality of active optical fiber connection cables 205, and the plurality of active optical fiber connection cables 205 are connected to the plurality of output ends 204. The first optical fiber connection cable is configured to transmit first pump light emitted by the first pump source 203.

In this embodiment, a feature of distinguishing the active optical fiber connection cable 205 from an ordinary optical fiber connection cable lies in that the active optical fiber connection cable 205 further includes an active doped fiber 206. The active doped fiber 206 may be an erbium doped fiber (erbium doped fiber, EDF), or may be a bi-doped fiber (Bi-doped fiber, BDF). It may be understood that the active doped fiber 206 may further be another doped fiber. This is not specifically limited herein. Notably, in this embodiment of this application, the active optical fiber connection cable 205 may include one active doped fiber 206, or may include a plurality of active doped fibers 206. This is not specifically limited herein.

In an optical transmission network, when the first optical signals need to be amplified, an optical port configured to transmit the first optical signals may be respectively connected to the input ends 202 and the output ends 204, and the pump source is enabled, that is, the first optical signals may be transmitted and amplified.

Specifically, the plurality of input ends 202 are connected to the optical port, receive the plurality of first optical signals from the optical port, and input the plurality of first optical signals into the first multi-port wavelength division multiplexing coupler 201 through a plurality of first connection ports. After receiving the plurality of first optical signals, the first multi-port wavelength division multiplexing coupler 201 may sequentially distribute, based on a specified split ratio, the first pump light in the first pump source 203 to different second optical fiber connection cables that may be amplified. In a process of coupling the first pump light into a transmission optical fiber of the first optical signal, a fused biconical wavelength division multiplexing coupling technology may be used. For example, a multi-layer film wavelength division multiplexing coupling technology or a grating wavelength division multiplexing coupling technology may be used. This is not specifically limited herein.

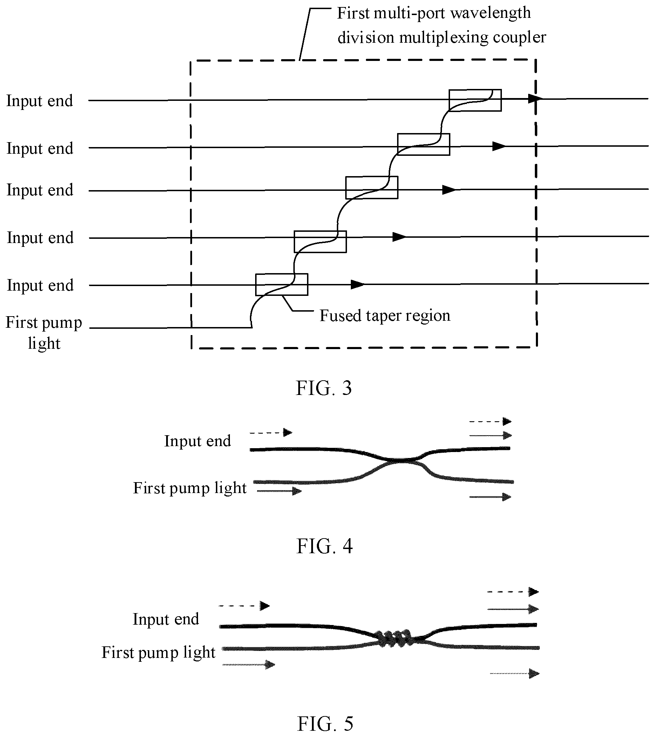

Specifically, as shown in FIG. 3, the first multi-port wavelength division multiplexing coupler 201 includes a fused-tapered region, the fused-tapered region includes a plurality of second optical fiber connection cables respectively connected to the plurality of first connection ports, so that the plurality of first optical signals are transmitted through the second optical fiber connection cables, and the first optical fiber connection cable is coupled to the plurality of second optical fiber connection cables in the fused-tapered region.

The fused biconical taper wavelength division multiplexing coupling technology is a manner in which two or more optical fibers whose coatings are removed are brought together in a specific manner, fused at a high temperature, and stretched to both sides, and finally, a special waveguide structure is formed in a form of a double cone in a heating area, to implement transmission optical power coupling. In this embodiment, in the fused-tapered region, cladding of the first optical fiber connection cable and cladding of the second optical fiber connection cables are combined together, and fiber cores are close enough to form weak coupling. In the coupling process, the first pump light may enter the first optical signal based on a specific split ratio by adjusting a coupling coefficient. The coupling coefficient is a quantity related to a wavelength. In a manufacturing process, the coupling coefficient may be controlled by changing a condition of the fused biconical taper, for example, adjusting a distance of the biconical taper, or adjusting a temperature of the biconical taper.

In this embodiment, the first optical fiber connection cable is coupled to the second optical fiber connection cables in the fused-tapered region in many manners, which are specifically described below. As shown in FIG. 4, the first optical fiber connection cable and the second optical fiber connection cables are tapered in the fused-tapered region, so that the first pump light transmitted by the first optical fiber connection cable is coupled, in a biconical taper manner, to the first optical signals transmitted by the second optical fiber connection cables. After the coupling, a part of optical power of the first pump light is coupled into the first optical signals, and after being coupled into the part of first pump light, the first optical signals continue to be transmitted along the second optical fiber connection cables, thereby reducing the first pump light of the part of optical power, and the first optical signals continue to be transmitted along the first optical fiber connection cable.

Further, as shown in FIG. 5, the first optical fiber connection cable and the second optical fiber connection cables may be bound and wound. After the bounding and winding, a contact area between the first optical fiber connection cable and the second optical fiber connection cables is increased, and the first optical fiber connection cable and the second optical fiber connection cables get into contact more closely, thereby improving pumping efficiency. Because the first optical fiber connection cable and the second optical fiber connection cables are bound, a problem of a loss of related optical power caused by polarization may be avoided, and the pumping efficiency is also improved.

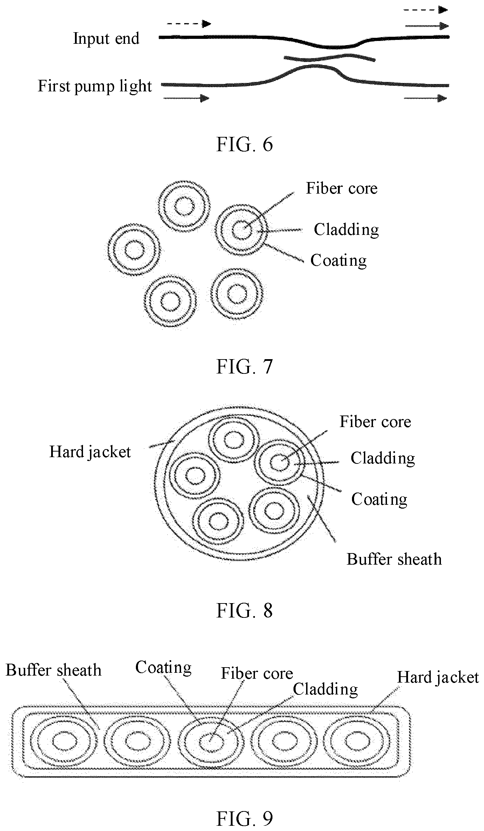

In a possible implementation, as shown in FIG. 6, third optical fiber connection cables may be further added in the fused-tapered region. The third optical fiber connection cables may be arranged between the first optical fiber connection cable and the second optical fiber connection cables, so that the first optical fiber connection cable is coupled to the third optical fiber connection cables, and the third optical fiber connection cables are coupled to the second optical fiber connection cables. In this embodiment, the third optical fiber connection cables are arranged between the first optical fiber connection cable and the second optical fiber connection cables, so that direct strong coupling between the first optical fiber connection cable and the second optical fiber connection cables may be avoided, thereby playing a role of adjustment. The first pump light transmitted by the first optical fiber connection cable may be first coupled to the third optical fiber connection cables, and a part of optical power is coupled to the third optical fiber connection cables. Then, the third optical fiber connection cables are coupled to the second optical fiber connection cables, and a part of optical power is coupled to the second optical fiber connection cables. In this way, the coupled optical power may be flexibly adjusted through the third optical fiber connection cables.

After the first pump light is coupled to the first optical signals by the first multi-port wavelength division multiplexing coupler 201, third optical signals are obtained. The third optical signals are optical signals obtained by coupling the first pump light to the first optical signals. The third optical signals continue to be transmitted through the active optical fiber connection cable 205. When the third optical signals pass through the active doped fiber 206, the active doped fiber excites element ions to a high-energy state, so that a particle undergoes stimulated radiation, thereby amplifying the third optical signals.

In an actual application process, usually, there are a plurality of active optical fiber connection cables in the optical amplification apparatus, and the plurality of active optical fiber connection cables are generally arranged in the optical amplification apparatus in a form of an array. Specifically, there are a plurality of array forms, which are separately described below.

As shown in FIG. 7, the active optical fiber connection cables of the array are in a form of a plurality of discrete optical fibers, and each active optical fiber connection cable includes an optical fiber core, cladding, and a coating. The optical fiber core is configured to transmit an optical signal, the cladding is a protective fixing layer for protecting the optical fiber core. The coating is an outermost protective fixing layer for protecting the optical fiber core and the cladding.

In a possible implementation, as shown in FIG. 8, the active optical fiber connection cables of the array are formed in a form of bundle optical fibers. Each active optical fiber connection cable includes an optical fiber core, cladding, a coating, a buffer sheath, and a hard jacket. The optical fiber core is configured to transmit an optical signal. The cladding is a protective fixing layer for protecting the optical fiber core. The coating is an outermost protective fixing layer for protecting the optical fiber core and the cladding. The buffer sheath is configured to wrap each individual active optical fiber connection cable. The active optical fiber connection cables of the array form a bundle shape, and a cross section is in a circular or elliptical shape for protecting the individual active optical fiber connection cable. Further, there is a hard jacket at an outer layer of the buffer sheath for further cushioning interference caused by an external force.

In a possible implementation, as shown in FIG. 9, the active optical fiber connection cables of the array are formed in a form of ribbon optical fibers. Each active optical fiber connection cable includes an optical fiber core, cladding, a coating, a buffer sheath, and a hard jacket. The optical fiber core is configured to transmit an optical signal, the cladding is a protective fixing layer for protecting the optical fiber core. The coating is an outermost protective fixing layer for protecting the optical fiber core and the cladding. The buffer sheath is configured to wrap each individual active optical fiber connection cable. The active optical fiber connection cables of the array form a ribbon shape, and a cross section is in a square shape for protecting the individual active optical fiber connection cable. An outer layer of the buffer sheath is a hard sheath, configured to further cushion interference caused by an external force.

It may be understood that in an actual application process, there are many other forming forms of the active optical fiber connection cables of the array. For example, one end is in a discrete form, and the other end is in a bundle form; or one end is in a discrete form, and the other end is in a ribbon form; or one end is in a bundle form, and the other end is in a ribbon form. A specific forming form of the active optical fiber connection cables of the array is not limited.

In an actual application process, because a gain spectrum based on the active doped fiber is not flat, in order to implement gain flattening on the optical signal transmitted in the active doped fiber, a gain flattening filter may be further arranged in the active optical fiber connection cables. Specifically, the gain flattening filter is configured to perform gain flattening on fourth optical signals, and the fourth optical signals are optical signals obtained by transmitting and amplifying the third optical signals by the active doped fiber.

In a possible implementation, the gain flattening filter may be a grating. Specifically, the grating may be set as a wavelength section of the fourth optical signal, so that the grating performs a function of gain flattening filtering on the fourth optical signals. In an actual application process, one or more gratings may be arranged in a single active optical fiber connection cable. For example, one or more gratings are arranged in an active doped fiber section, or one or more gratings are arranged on an ordinary optical fiber of the active optical fiber connection cables. This is not specifically limited herein. In an optical fiber grating technology, because a long-period optical fiber grating may disperse filtered signal light into the cladding of the optical fiber instead of the optical fiber core, impact on amplification performance of the system is avoided. In grating filtering setting, a noise coefficient of the optical amplifier may also be increased by using a distribution filtering manner, thereby improving performance of the optical amplifier.

Further, a wavelength of the grating may further be set to a wavelength section of the first pump light, so that the grating performs power distribution regulation on the first pump light. Specifically, a grating technology of a fiber Bragg grating (Fiber Bragg Grating, FBG) may be used, and power distribution regulation on the first pump light on the active optical fiber connection cables is implemented by controlling transmittance or reflectivity of the FBG.

Further, factors such as spontaneous radiation noise and end surface reflection generated in an optical signal amplification process affect an effect of the optical amplification apparatus to some extent. Therefore, in different scenarios, an optical isolator may be additionally added to improve performance of the optical amplification apparatus. Specifically, the optical isolator may be arranged at the plurality of input ends or the plurality of output ends, and is configured to isolate reflected light of the first optical signals or reflected light of the plurality of second optical signals. In a possible implementation, the optical isolator is a multi-path shared optical isolator, for example, an integrated optical isolator or a spatial optical isolator. This is not specifically limited herein.

In this embodiment, a bidirectional pumping manner may further be used, that is, a multi-port wavelength division multiplexing coupler and a pump source are respectively arranged at two ends of the active optical fiber connection cables of the array, to implement bidirectional pumping on a gain medium in the active optical fiber connection cables.

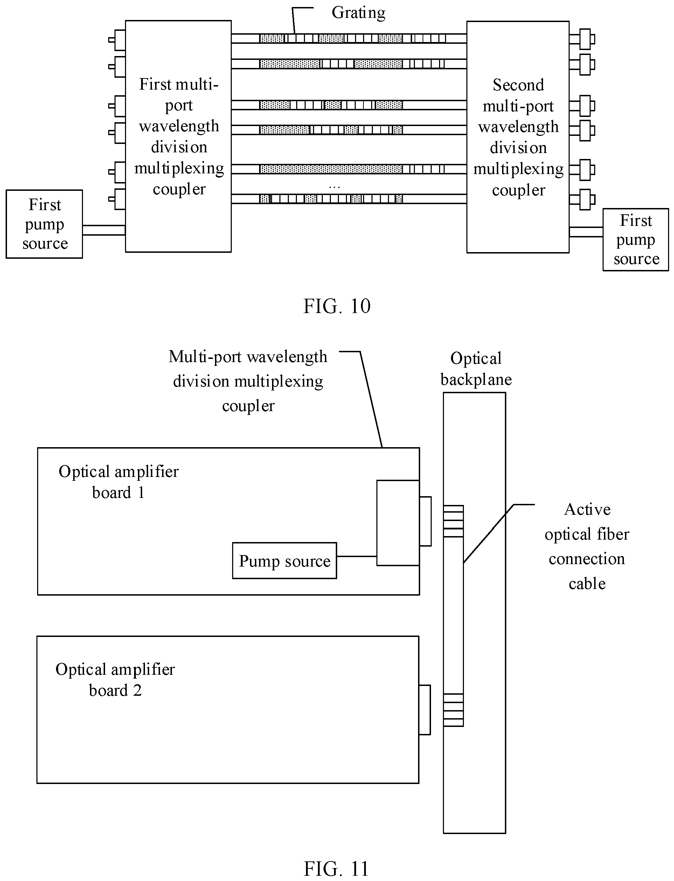

Specifically, refer to FIG. 10. The optical amplification apparatus shown in FIG. 10 is an optical amplification apparatus formed by using a bidirectional pumping manner. In addition to components of the optical amplification apparatus shown in FIG. 2, the optical amplification apparatus further includes a second multi-port wavelength division multiplexing coupler and a second pump source. In the arrangement manner, a plurality of output ends may be used as input ends to receive a plurality of first target optical signals, and wavelengths of the plurality of first target optical signals are different. The plurality of input ends may be further used as output ends, and are configured to output a plurality of second target optical signals. The second target optical signals are optical signals obtained by amplifying the first target optical signals.

Specifically, the second pump source is configured to provide second pump light, and the second pump light is configured to amplify the plurality of first target optical signals. After the plurality of first target optical signals are received by the plurality of output ends, the plurality of first target optical signals are transmitted to the second multi-port wavelength division multiplexing coupler through a plurality of second connection ports of the second multi-port wavelength division multiplexing coupler, so that the second multi-port wavelength division multiplexing coupler couples the second pump light and the first target optical signals. The second pump light is coupled to the first target optical signals to obtain third target optical signals, and the third target optical signals are transmitted from the second multi-port wavelength division multiplexing coupler to an active optical fiber connection cable. The active optical fiber connection cable is further configured to transmit and amplify a plurality of third target optical signals, and output optical signals obtained by transmitting and amplifying the third target optical signals from the plurality of input ends.

In this embodiment of this application, a wavelength division multiplexing coupler is connected to the plurality of input ends, and performs optical amplification on the plurality of first optical signals with different wavelengths, and the active optical fiber connection cable transmits and amplifies the first optical signals, so that a size of an optical amplification apparatus is reduced, and a space required for deploying an array of the optical amplification apparatus is reduced. This simplifies deployment of the optical amplification apparatus.

FIG. 11 is a schematic structural diagram of an optical amplification system according to an embodiment of this application.

The optical amplification system includes an optical amplifier board 1 and an optical backplane. The optical amplifier board 1 further includes a multi-port wavelength division multiplexing coupler and a pump source. The optical backplane includes an active optical fiber connection cable. As shown in FIG. 11, a port of the multi-port wavelength division multiplexing coupler in the optical amplifier board 1 is connected to the active optical fiber connection cable in the optical backplane. When an optical signal is transmitted from the optical port of the optical amplifier board 1 to an optical port of an optical amplifier board 2, the optical signal is coupled to pump light emitted by the pump source through the multi-port wavelength division multiplexing coupler in the optical amplifier board 1, then is transmitted to the active optical fiber connection cable in the optical backplane for further optical amplification, and then is transmitted to the optical port of the optical amplifier board 2. The active optical fiber connection cable serves as a connection optical fiber in the original optical backplane. Because a transmission direction of the optical signal is the same as a transmission direction of the pump light, an optical amplification system of a forward pump is formed.

In this embodiment, functions of the pump source, the multi-port wavelength division multiplexing coupler and the active optical fiber connection cable are similar to functions of the first pump source, the first multi-port wavelength division multiplexing coupler, and the active optical fiber connection cable of the optical amplification apparatus in the embodiment shown in FIG. 2, and details are not repeated herein.

In this embodiment of this application, the optical amplification apparatus is arranged in the optical amplifier board 1 and the optical backplane respectively, to form an optical amplification system, thereby improving flexibility of configuration of the optical amplification system.

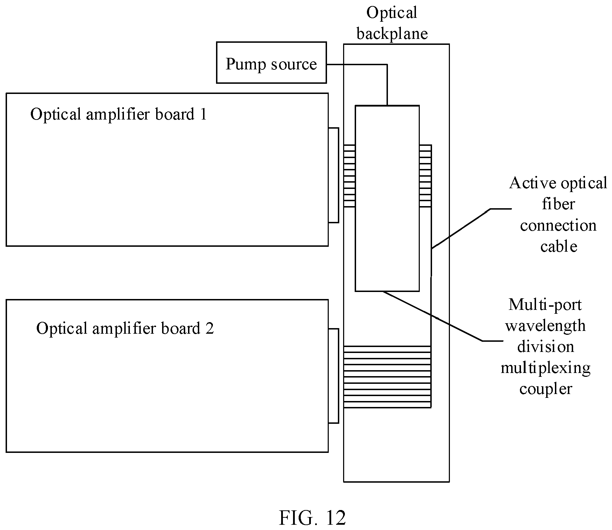

FIG. 12 is a schematic structural diagram of an optical backplane according to an embodiment of this application.

The optical backplane includes a multi-port wavelength division multiplexing coupler and an active optical fiber connection cable. The multi-port wavelength division multiplexing coupler is connected to the active optical fiber connection cable, and the multi-port wavelength division multiplexing coupler is further connected to a pump source. The pump source may be arranged outside the optical backplane, or may be arranged inside the optical backplane, which is not specifically limited herein.

In a use scenario, the optical amplifier board 1 is connected to a multi-port wavelength division multiplexing coupler in the optical backplane through an optical port, and the optical port transmits an optical signal to the multi-port wavelength division multiplexing coupler. The multi-port wavelength division multiplexing coupler couples the optical signal and the pump light, and transmits the coupled optical signal to an optical port of the optical amplifier board 2 through the active optical fiber connection cable.

In this embodiment, functions of the pump source, the multi-port wavelength division multiplexing coupler and the active optical fiber connection cable are similar to functions of the first pump source, the first multi-port wavelength division multiplexing coupler, and the active optical fiber connection cable of the optical amplification apparatus in the embodiment shown in FIG. 2, and details are not repeated herein.

In this embodiment of this application, a wavelength division multiplexing coupler performs optical amplification on a plurality of first optical signals with different wavelengths, so that a size of the optical backplane is reduced, and a space required for deploying the optical backplane is reduced. This simplifies deployment of the optical backplane.

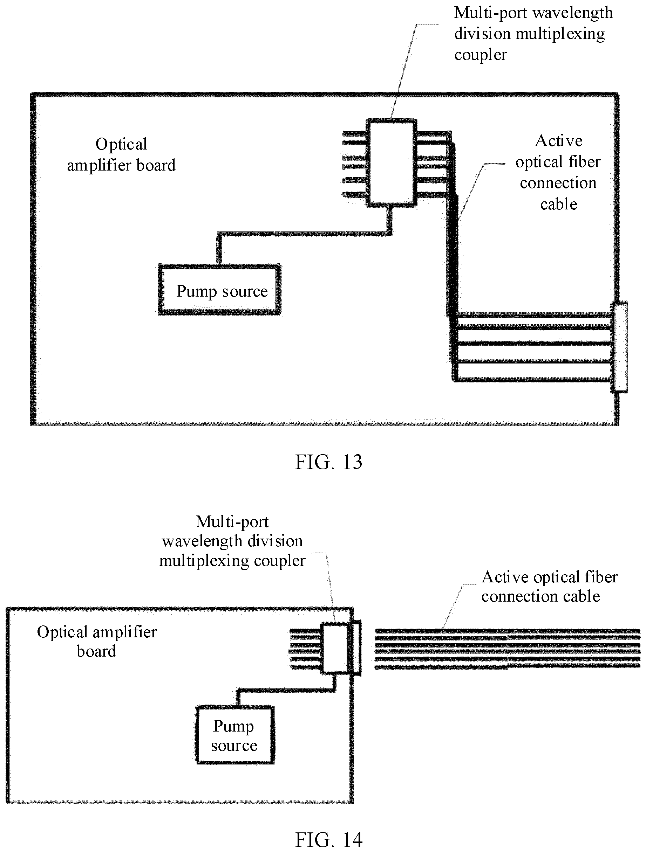

FIG. 13 is a schematic structural diagram of an optical amplifier board according to an embodiment of this application.

The optical amplifier board includes a multi-port wavelength division multiplexing coupler, an active optical fiber connection cable, and a pump source. The pump source is connected to the first multi-port wavelength division multiplexing coupler.

In this embodiment, functions of the pump source, the multi-port wavelength division multiplexing coupler and the active optical fiber connection cable are similar to functions of the first pump source, the first multi-port wavelength division multiplexing coupler, and the active optical fiber connection cable of the optical amplification apparatus in the embodiment shown in FIG. 2, and details are not repeated herein.

In this embodiment of this application, a wavelength division multiplexing coupler performs optical amplification on a plurality of first optical signals with different wavelengths, so that a size of an optical amplifier board integrating an optical amplification apparatus is reduced, and a space required for deploying the optical amplifier board integrating the optical amplification apparatus is reduced. This simplifies deployment of the optical amplifier board integrating the optical amplification apparatus.

FIG. 14 is another schematic structural diagram of an optical amplifier board according to an embodiment of this application.

The optical amplifier board includes a multi-port wavelength division multiplexing coupler and a pump source. The pump source is connected to the first multi-port wavelength division multiplexing coupler.

In this embodiment, functions of the pump source and the multi-port wavelength division multiplexing coupler are similar to functions of the first pump source and the first multi-port wavelength division multiplexing coupler of the optical amplification apparatus in the embodiment shown in FIG. 2, and details are not repeated herein.

In this embodiment of this application, a wavelength division multiplexing coupler performs optical amplification on a plurality of first optical signals with different wavelengths, so that a size of an optical amplifier board integrating an optical amplification apparatus is reduced, and a space required for deploying the optical amplifier board integrating the optical amplification apparatus is reduced. This simplifies deployment of the optical amplifier board integrating the optical amplification apparatus.

FIG. 3 is a schematic structural diagram of a multi-port wavelength division multiplexing coupler according to an embodiment of this application.

The multi-port wavelength division multiplexing coupler includes a plurality of first connection ports and a fused-tapered region. A plurality of first connection ports are configured to receive a plurality of first optical signals with different wavelengths. The plurality of first connection ports are further configured to receive first pump light for amplifying the plurality of first optical signals. The fused-tapered region is configured to couple the plurality of first optical signals and the first pump light.

In this embodiment, a function of the multi-port wavelength division multiplexing coupler is similar to a function of the first multi-port wavelength division multiplexing coupler in the embodiment shown in FIG. 2, and details are not repeated herein.

In embodiments of this application, a wavelength division multiplexing coupler performs optical amplification on a plurality of first optical signals with different wavelengths, so that a size of an optical amplification apparatus is reduced, and a space required for deploying the optical amplification apparatus is reduced. This simplifies deployment of the optical amplification apparatus.

## Claims

1. An optical amplification apparatus, comprising:
a plurality of input ends, configured to receive a plurality of first optical signals with different wavelengths;
a plurality of output ends, configured to output a plurality of second optical signals, wherein the plurality of second optical signals are optical signals obtained by amplifying the plurality of first optical signals;
a first pump source, wherein the first pump source is configured to provide first pump light for amplifying the plurality of first optical signals;
a first multi-port wavelength division multiplexing coupler, wherein the first multi-port wavelength division multiplexing coupler comprises a plurality of first connection ports connected to the plurality of input ends, and the first multi-port wavelength division multiplexing coupler is configured to couple the plurality of first optical signals and the first pump light; and
an active optical fiber connection cable, wherein the active optical fiber connection cable comprises an active doped fiber for transmitting and amplifying a plurality of third optical signals, and the plurality of third optical signals are optical signals obtained by coupling the plurality of first optical signals to the first pump light; and
the plurality of input ends are connected to the first multi-port wavelength division multiplexing coupler, the first pump source is connected to the first multi-port wavelength division multiplexing coupler through a first optical fiber connection cable, the first multi-port wavelength division multiplexing coupler is connected to the active optical fiber connection cable, the active optical fiber connection cable is connected to the plurality of output ends, and the first optical fiber connection cable is configured to transmit the first pump light.

2. The optical amplification apparatus according to claim 1, wherein the first multi-port wavelength division multiplexing coupler comprises a fused-tapered region, the fused-tapered region comprises a plurality of second optical fiber connection cables respectively connected to the plurality of first connection ports, so that the plurality of first optical signals are transmitted through the second optical fiber connection cables, and the first optical fiber connection cable is coupled to the plurality of second optical fiber connection cables in the fused-tapered region.

3. The optical amplification apparatus according to claim 2, wherein the fused-tapered region further comprises a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

4. The optical amplification apparatus according to claim 2, wherein the first optical fiber connection cable is separately bound with the plurality of second optical fiber connection cables.

5. The optical amplification apparatus according to any one of claims 1 to 4, further comprising:
a gain flattening filter, wherein the gain flattening filter is configured to perform gain flattening on fourth optical signals, the fourth optical signals are optical signals obtained by transmitting and amplifying the third optical signals by the active doped fiber, and the gain flattening filter is arranged on the active optical fiber connection cable.

6. The optical amplification apparatus according to claim 5, wherein the gain flattening filter is a grating.

7. The optical amplification apparatus according to claim 6, wherein a wavelength of the grating is set to a wavelength section of the fourth optical signal, so that the grating performs a function of gain flattening filtering on the fourth optical signals.

8. The optical amplification apparatus according to claim 6, wherein a wavelength of the grating is set to a wavelength section of the first pump light, so that the grating performs power distribution regulation on the first pump light.

9. The optical amplification apparatus according to any one of claims 1 to 8, wherein the plurality of output ends are further configured to receive a plurality of first target optical signals with different wavelengths;
the plurality of input ends are further configured to output a plurality of second target optical signals, wherein the plurality of second target optical signals are optical signals obtained by amplifying the first target optical signals;
the optical amplification apparatus further comprises:
a second pump source, wherein the second pump source is configured to provide second pump light, and the second pump light is configured to amplify the plurality of first target optical signals; and
a second multi-port wavelength division multiplexing coupler, wherein the second multi-port wavelength division multiplexing coupler comprises a plurality of second connection ports, the plurality of second connection ports are connected to the plurality of output ends, and the second multi-port wavelength division multiplexing coupler is configured to couple the plurality of first target optical signals and the second pump light;
the active doped fiber is further configured to transmit and amplify a plurality of third target optical signals, and the plurality of third target optical signals are optical signals obtained by coupling the plurality of first target optical signals to the second pump light; and
the plurality of output ends are connected to the second multi-port wavelength division multiplexing coupler, the second pump source is connected to the second multi-port wavelength division multiplexing coupler, the second multi-port wavelength division multiplexing coupler is connected to the active optical fiber connection cable, and the active optical fiber connection cable is connected to the first multi-port wavelength division multiplexing coupler.

10. A multi-port wavelength division multiplexing coupler, comprising:
a plurality of first connection ports, configured to receive a plurality of first optical signals with different wavelengths; and
the plurality of first connection ports are further configured to receive first pump light for amplifying the plurality of first optical signals; and
a fused-tapered region, configured to couple the plurality of first optical signals and the first pump light.

11. The multi-port wavelength division multiplexing coupler according to claim 10, wherein the fused-tapered region comprises a first optical fiber connection cable, configured to transmit the first pump light;
the fused-tapered region further comprises a plurality of second optical fiber connection cables, wherein the plurality of second optical fiber connection cables are configured to transmit the first optical signals; and
the first optical fiber connection cable is coupled to the plurality of second optical fiber connection cables in the fused-tapered region.

12. The multi-port wavelength division multiplexing coupler according to claim 11, wherein the fused-tapered region further comprises a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

13. The multi-port wavelength division multiplexing coupler according to claim 12, wherein the first optical fiber connection cable is separately bound with the plurality of second optical fiber connection cables.

14. An optical amplifier board, comprising:
a first pump source, wherein the first pump source is configured to provide first pump light; and
a first multi-port wavelength division multiplexing coupler, configured to receive a plurality of first optical signals with different wavelengths;
the first multi-port wavelength division multiplexing coupler is further configured to couple the plurality of first optical signals and the first pump light; and
the first pump source is connected to the first multi-port wavelength division multiplexing coupler.

15. The optical amplifier board according to claim 14, wherein the first multi-port wavelength division multiplexing coupler comprises a fused-tapered region, and the fused-tapered region comprises a first optical fiber connection cable for transmitting the first pump light;
the fused-tapered region further comprises a plurality of second optical fiber connection cables, wherein the plurality of second optical fiber connection cables are configured to transmit the first optical signals; and
the first optical fiber connection cable is coupled to the plurality of second optical fiber connection cables in the fused-tapered region.

16. The optical amplifier board according to claim 15, wherein the fused-tapered region further comprises a plurality of third optical fiber connection cables respectively arranged between the first optical fiber connection cable and the plurality of second optical fiber connection cables, the first optical fiber connection cable is coupled to the third optical fiber connection cables, and the third optical fiber connection cables are coupled to the second optical fiber connection cables.

17. The optical amplifier board according to claim 15, wherein the first optical fiber connection cable is separately bound with the plurality of second optical fiber connection cables.

18. The optical amplifier board according to claims 14 to 17, further comprising:
an active optical fiber connection cable, wherein the active optical fiber connection cable comprises an active doped fiber for transmitting and amplifying a plurality of third optical signals, the plurality of third optical signals are optical signals obtained by coupling the plurality of first optical signals to the first pump light, the plurality of first optical signals are received by the first multi-port wavelength division multiplexing coupler, and wavelengths of the plurality of first optical signals are different.

19. The optical amplifier board according to any one of claims 14 to 18, further comprising:
a gain flattening filter, wherein the gain flattening filter is configured to perform gain flattening on fourth optical signals, the fourth optical signals are optical signals obtained by transmitting and amplifying the third optical signals by the active doped fiber, and the gain flattening filter is arranged on the active optical fiber connection cable.

20. The optical amplifier board according to claim 19, wherein the gain flattening filter is a grating.

21. The optical amplifier board according to claim 20, wherein a wavelength of the grating is set to a wavelength section of the fourth optical signal, so that the grating performs a function of gain flattening filtering on the fourth optical signals.

22. The optical amplifier board according to claim 21, wherein a wavelength of the grating is set to a wavelength section of the first pump light, so that the grating performs power distribution regulation on the first pump light.

23. An optical backplane, comprising:
a first multi-port wavelength division multiplexing coupler, configured to receive a plurality of first optical signals with different wavelengths;
a first optical fiber connection cable, configured to receive first pump light sent by a first pump source; and
an active optical fiber connection cable, wherein the active optical fiber connection cable comprises an active doped fiber for transmitting and amplifying a plurality of third optical signals, and the plurality of third optical signals are optical signals obtained by coupling the plurality of first optical signals to the first pump light; and
the first optical fiber connection cable is connected to the first multi-port wavelength division multiplexing coupler, and the active optical fiber connection cable is connected to the first multi-port wavelength division multiplexing coupler.

24. An optical amplification system, comprising:
an optical amplifier board, wherein the optical amplifier board comprises a first pump source configured to provide first pump light;
the optical amplifier board further comprises a first multi-port wavelength division multiplexing coupler, configured to receive a plurality of first optical signals with different wavelengths;
the first multi-port wavelength division multiplexing coupler is further configured to couple the plurality of first optical signals and the first pump light; and
the first pump source is connected to the first multi-port wavelength division multiplexing coupler; and
an optical backplane, wherein the optical backplane comprises an active optical fiber connection cable, the active optical fiber connection cable comprises an active doped fiber for transmitting and amplifying a plurality of third optical signals, and the plurality of third optical signals are optical signals obtained by coupling the plurality of first optical signals to the first pump light; and
the optical amplifier board is connected to the optical backplane.
